# FASCICULE DE BREVET EUROPEEN

(11) **EP 1 681 503 B1**
(45) Date de publication et mention de la délivrance du brevet: **04.04.2012**
(21) Numéro de dépôt: 05000668.3
(22) Date de dépôt: 14.01.2005
(51) Int. Cl.: F16L 9/21, F16L 59/14, F01N 13/14

(54) **Tubulaire rigide à isolation thermique et sonore renforcée**
Starres Rohr mit verstärkten Hitze und Schalldämmung
Rigid tube with increased heat and sound insulation

(43) Date de publication de la demande: 19.07.2006
(73) Titulaire: BOA FLEXIBLE SOLUTIONS, 02130 Fere en Tardenois (FR); VDL Belgium N.V., 9320 Aalst (BE)
(72) Inventeur: Abraini, Salvatore, 7370 Elouges (BE)
(74) Mandataire: Gaillarde, Frédéric F. Ch.

(56) Documents cités:
- EP-A- 0 041 252
- EP-A- 0 282 689
- EP-A- 0 974 741
- DE-A1- 2 406 650
- GB-A- 784 699
- US-A- 3 473 575
- US-B1- 6 607 010

## Description

La présente invention se rapporte à une tubulure rigide comprenant un premier tube inséré dans un deuxième tube de façon coaxiale, l'un des deux tubes possédant une paroi lisse et l'autre une paroi majoritairement ondulée. Une telle tubulure rigide peut être utilisée dans de nombreuses applications, et est notamment particulièrement indiquée pour le transfert de gaz chauds générés par des moteurs utilisés dans l'industrie automobile.

Pour renforcer l'isolation thermique et sonore, il est déjà connu, notamment dans l'industrie automobile, d'utiliser des tubulures rigides à double épaisseur comprenant deux tubes coaxiaux à parois lisses insérés l'un dans l'autre. Néanmoins, lorsqu'il s'agit de cintrer la tubulure rigide ainsi formée, le procédé employé est particulièrement complexe et coûteux. En effet, de la silice ou des billes d'acier par exemple doivent être préalablement glissées entre les deux parois afin d'éviter que ces dernières n'entrent en contact lors de l'opération de cintrage.

Pour simplifier cette opération de cintrage, il a alors été proposé de réaliser des tubulures rigides à double épaisseur à l'aide d'un tube à paroi lisse et d'un tube à paroi ondulée coaxiaux (voir, par exemple, le document DE-A-2 406 650). Les deux variantes ont été envisagées, à savoir, le tube à paroi ondulée inséré dans le tube à paroi lisse, et le tube à paroi lisse inséré dans le tube à paroi ondulée. Cependant, après analyse, contrairement à ce que l'on pouvait imaginer, une tubulure rigide à double épaisseur de ce type n'est pas plus efficace, en termes d'isolation thermique et sonore, qu'un tube à paroi lisse. En effet, à titre d'exemple, pour une tubulure rigide à double cintrage composée d'un tube externe à paroi lisse et d'un tube interne à paroi ondulée, la température mesurée du tube externe est de 449°C avec des conditions de débit de 720 m³/h d'air à 530°C. Or, un tube à double cintrage et à simple paroi lisse possède une température de 410°C dans les mêmes conditions de débit. De plus, dans le cas où le tube à paroi ondulée est logé à l'intérieur du tube à paroi lisse, l'écoulement du fluide transporté est perturbé, ce qui se traduit par une augmentation des pertes de charges et une augmentation importante de bruit.

La présente invention a pour but de remédier aux inconvénients cités précédemment, et consiste pour cela en une tubulure rigide obtenue par cintrage comprenant un premier tube dans lequel est inséré un deuxième tube de façon coaxiale, l'un des deux tubes possédant une paroi lisse et l'autre une paroi majoritairement ondulée, caractérisée en ce qu'elle comprend au moins un troisième tube inséré dans le deuxième tube de façon coaxiale, les tubes étant alternativement à paroi lisse et à paroi ondulée, et en ce que chaque tube possède une épaisseur inférieure à 1 mm.

Ainsi, dans une tubulure rigide selon l'invention, les tubes étant alternativement à paroi lisse et à paroi ondulée, il en découle que l'opération de cintrage peut être réalisée plus aisément que dans le cas d'une tubulure rigide formée par deux tubes coaxiaux à paroi lisse. Par ailleurs, alors que le fait de substituer une tubulure rigide double paroi à un tube simple ne procure aucun avantage particulier en termes d'isolation thermique et sonore, il a été constaté qu'une tubulure rigide possédant au moins trois parois alternativement lisses/ondulées permet, par création de poches d'air isolantes situées de part et d'autre de la paroi de chaque tube intercalaire, de limiter grandement l'influence réciproque de la température du fluide transporté sur l'environnement extérieur. De plus, la multiplication des parois permet de limiter les nuisances sonores générées par la circulation du fluide.

Par conséquent, notamment dans les applications d'échappement, une tubulure rigide selon l'invention peut être associée à un flexible ou une tubulure souple qu'elle vient compléter, et se substitue avantageusement aux tubes rigides épais traditionnellement employés dans la mesure où l'isolation thermique et sonore est grandement améliorée.

Avantageusement, les tubes sont en acier, ou en acier inoxydable, ou encore en aluminium.

Avantageusement encore, la paroi de chaque tube à paroi ondulée présente des ondes sensiblement parallèles ou hélicoïdales.

Selon une première variante de la présente invention, la paroi de chaque tube à paroi ondulée peut être localement lisse.

Selon une deuxième variante de la présente invention, au moins un matériau isolant peut être inséré dans chaque espace séparant la paroi d'un tube de la paroi d'un autre tube. Ce matériau isolant est constitué à base de fibres de verre ou d'au moins un isolant microporeux du type laine de roche.

Selon un mode de réalisation préférée de l'invention, la tubulure rigide comprend trois tubes coaxiaux. Préférentiellement encore, cette tubulure rigide se décompose en un tube externe à paroi lisse dans lequel est inséré un tube intermédiaire à paroi ondulée à l'intérieur duquel est inséré un tube interne à paroi lisse. De plus, une couche de matériau isolant peut être disposée entre la paroi lisse du tube externe et la paroi ondulée du tube intermédiaire. En variante, cette couche de matériau isolant peut être disposée entre la paroi ondulée du tube intermédiaire et la paroi lisse du tube interne.

L'invention sera mieux comprise à l'aide de la description détaillée qui est exposée ci-dessous en regard du dessin annexé dans lequel :
La figure 1 est une vue schématique en coupe longitudinale d'une tubulure rigide selon le mode de réalisation préférée de l'invention, avant l'opération de cintrage.
La figure 2 est une vue de détail à échelle agrandie d'une partie de la tubulure rigide représentée à la figure 1, avant l'opération de cintrage.
La figure 3 est une vue schématique en coupe longitudinale de la tubulure rigide représentée à la figure 1, après l'opération de cintrage.
La figure 4 est une vue schématique en coupe longitudinale de la tubulure rigide représentée à la figure 1, avec ajout d'une couche intermédiaire d'un matériau isolant, avant l'opération de cintrage.
La figure 5 est une vue de détail à échelle agrandie d'une partie de la tubulure rigide représentée à la figure 4, avant l'opération de cintrage.
La figure 6 est une vue schématique en coupe longitudinale d'une variante de la tubulure rigide représentée à la figure 1, avant l'opération de cintrage.
La figure 7 est une vue schématique en coupe longitudinale de la tubulure rigide représentée à la figure 6, après l'opération de cintrage.
La figure 8 est une vue schématique en coupe longitudinale d'un premier type de tubulure rigide à quatre tubes, avant l'opération de cintrage.
La figure 9 est une vue schématique en coupe longitudinale de la tubulure rigide représentée à la figure 8, avec ajout de deux couches intermédiaires de matériau isolant, avant l'opération de cintrage.
La figure 10 est une vue schématique en coupe longitudinale d'un second type de tubulure rigide à quatre tubes, avant l'opération de cintrage.
La figure 11 est une vue schématique en coupe longitudinale de la tubulure rigide représentée à la figure 10, avec ajout de deux couches de matériau isolant, avant l'opération de cintrage.
La figure 12 est une vue schématique en coupe longitudinale d'un premier type de tubulure rigide à cinq tubes, avant l'opération de cintrage.
La figure 13 est une vue schématique en coupe longitudinale de la tubulure rigide représentée à la figure 12, avec ajout de deux couches intermédiaires de matériau isolant, avant l'opération de cintrage.

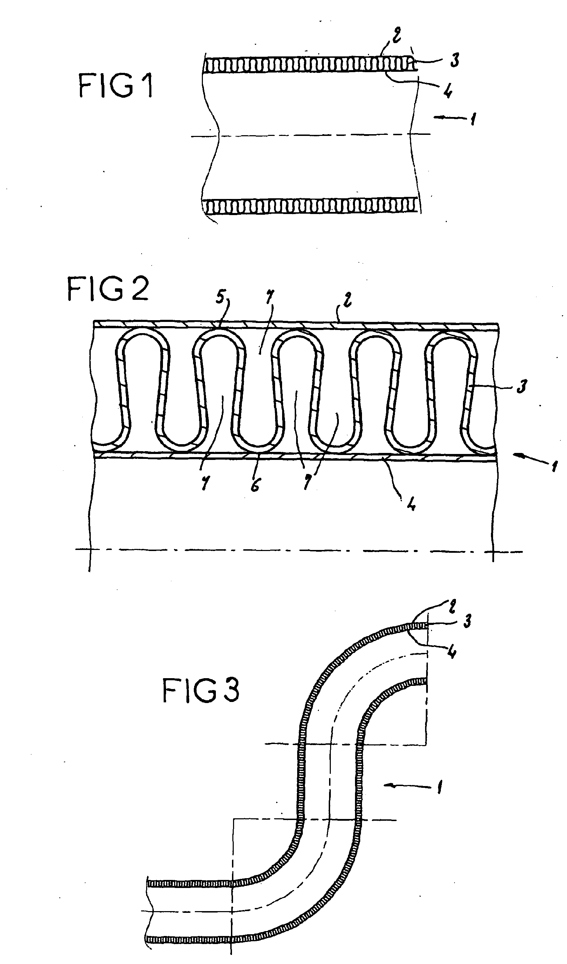

Une tubulure rigide 1 selon le mode de réalisation préférée de l'invention, telle que représentée aux figures 1 à 3, est réalisée à partir d'un tube externe 2 possédant une paroi lisse. Dans un premier temps, un tube intermédiaire 3 possédant une paroi ondulée et présentant un diamètre légèrement inférieur à celui du tube externe 2 est inséré dans ce dernier. Dans un deuxième temps, un tube interne 4 possédant une paroi lisse et présentant un diamètre légèrement inférieur à celui du tube intermédiaire 3 est inséré dans ce dernier.

La paroi ondulée du tube intermédiaire 3 comprend une succession d'ondes parallèles qui présentent chacune, d'une part, un point 5 orienté vers l'extérieur au contact du tube externe 2, et d'autre part, un point 6 orienté vers l'intérieur au contact du tube interne 4. Des poches d'air isolantes 7 sont donc réalisées de part et d'autre de la paroi ondulée du tube intermédiaire 3.

Ces trois tubes 2 à 4 sont coaxiaux et peuvent être réalisés en acier, ou en acier inoxydable, ou encore en aluminium par exemple. Comme représenté à la figure 3, une telle tubulure rigide 1 peut alors être facilement cintrée selon les techniques habituelles utilisées pour le cintrage de tubes.

A titre d'exemple, en réalisant une tubulure rigide 1 à double cintrage, avec un rayon de cintrage à l'axe de 250 mm, à partir de trois tubes 2 à 4 en acier inoxydable possédant une épaisseur de 0, 4 millimètre, une longueur de 800 millimètres, et un diamètre de 80 millimètres environ, il a été constaté que la température d'air en sortie de la tubulure rigide 1 est de 510°C pour un débit de 720 m³/h d'air à 530°C, et que la température du tube externe 2 est de 210°C. Une telle tubulure rigide 1 permet ainsi de grandement limiter les phénomènes de transfert de chaleur par conduction et rayonnement.

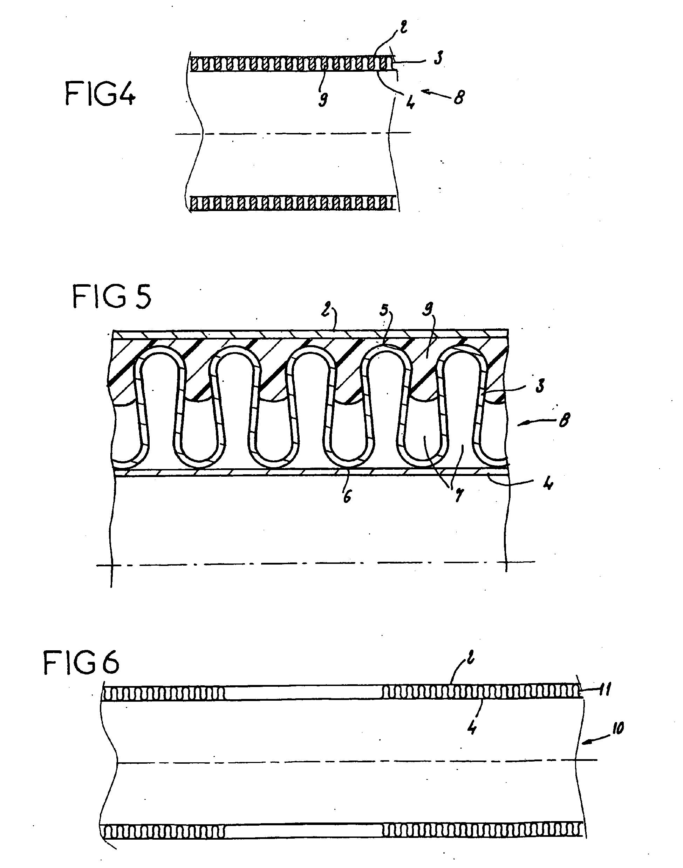

Aux figures 4 et 5 est représentée une tubulure rigide 8 qui se différencie uniquement de la tubulure rigide 1 par le fait qu'une couche 9 d'un matériau isolant a été intercalée entre le tube externe 2 et le tube intermédiaire 3. Une telle couche 9 pénètre en partie dans chacune des poches d'air isolantes 7 situées entre le tube externe 2 et le tube intermédiaire 3, et peut être réalisée en fibres de verre ou encore en un isolant microporeux du type laine de roche par exemple.

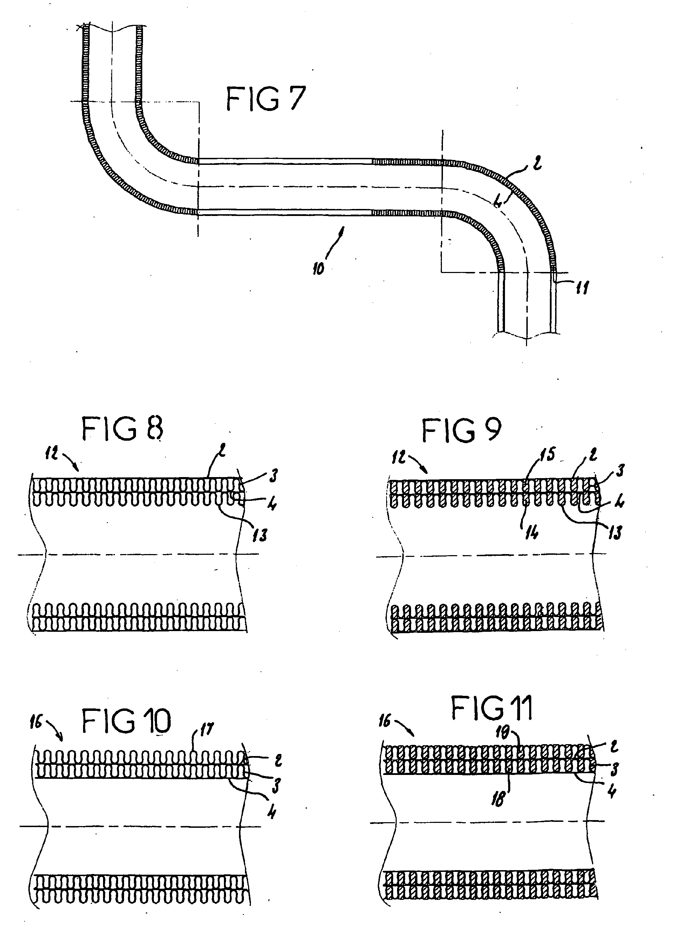

Aux figures 6 et 7 est représentée une tubulure rigide 10 constituant une variante de réalisation de la tubulure rigide 1, dans la mesure où le tube intermédiaire 3 de cette dernière est remplacé par un tube intermédiaire 11, qui possède une paroi majoritairement ondulée pouvant être localement lisse. Comme représenté plus particulièrement à la figure 7, les opérations de cintrage sont alors uniquement effectuées dans les zones où la paroi du tube intermédiaire 11 est ondulée.

A la figure 8 est représentée une tubulure rigide 12 qui se différencie de la tubulure rigide 1 par le fait qu'un quatrième tube 13 à paroi ondulée est glissé à l'intérieur du tube interne 4 à paroi lisse. Comme représenté à la figure 9, une première couche 14 de matériau isolant peut être disposée entre le quatrième tube 13 et le tube interne 4, et une seconde couche 15 de matériau isolant peut être prévue entre le tube intermédiaire 3 et le tube externe 2. Un autre type de tubulure rigide à quatre tubes est représenté aux figures 10 et 11. En effet, une tubulure rigide 16 est réalisée à partir de la tubulure rigide 1 autour de laquelle est rapporté un quatrième tube 17 à paroi ondulée. Comme précédemment, deux couches 18, 19 de matériau isolant peuvent être prévues.

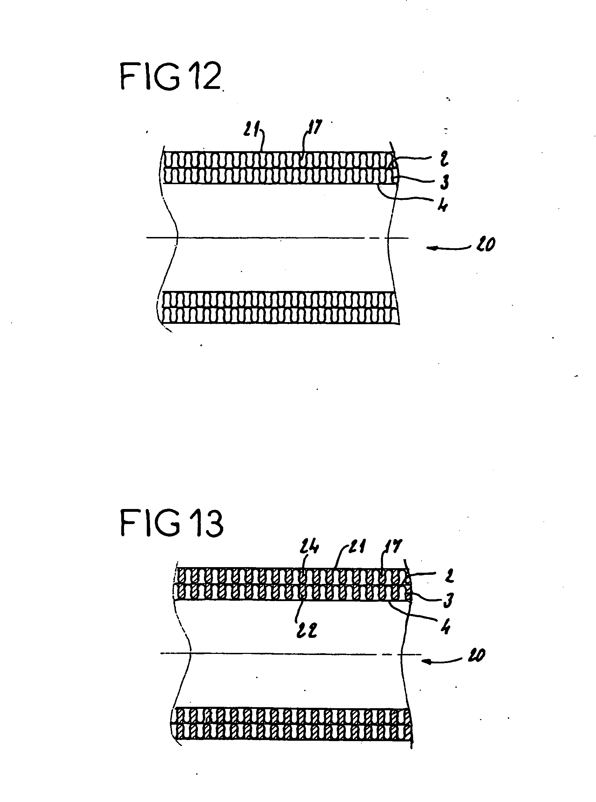

Enfin, une tubulure rigide 20 constituée de cinq tubes est représentée à la figure 12. Cette tubulure rigide 20 correspond à la tubulure rigide 16 de la figure 10 autour de laquelle a été positionné un cinquième tube 21 à paroi lisse. Comme représenté à la figure 13, il est bien évidemment possible d'intégrer deux couches intermédiaires 22, 24 de matériau isolant.

Il doit être bien compris que la paroi de chaque tube constitutif d'une tubulure rigide selon l'invention possédant avantageusement une épaisseur très réduite, cela permet en finalité de limiter grandement la masse globale de la tubulure rigide.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention selon les revendications.

## Revendications

1. Tubulure rigide (1, 8, 10) obtenue par cintrage comprenant un premier tube (2) dans lequel est inséré un deuxième tube (3, 11) de façon coaxiale, l'un des deux tubes possédant une paroi lisse et l'autre une paroi majoritairement ondulée, **caractérisée en ce qu'**elle comprend au moins un troisième tube (4) inséré dans le deuxième tube de façon coaxiale, les tubes étant alternativement à paroi lisse et à paroi ondulée, et **en ce que** chaque tube (2, 3, 4, 11) possède une épaisseur inférieure à 1 mm.

2. Tubulure rigide (1, 8, 10) selon la revendication 1, en ce que les tubes (2, 3, 4, 11) sont en acier, ou en acier inoxydable, ou encore en aluminium.

3. Tubulure rigide (1, 8, 10) selon l'une quelconque des revendications 1 ou 2, **caractérisée en ce que** la paroi de chaque tube (3, 11) à paroi ondulée présente des ondes sensiblement parallèles ou hélicoïdales.

4. Tubulure rigide (10) selon l'une quelconque des revendications 1 à 3, **caractérisé en ce que** la paroi de chaque tube (11) à paroi ondulé peut être localement lisse, le cintrage étant effectué dans les zones où la paroi du tube (11) à paroi ondulée est ondulée.

5. Tubulure rigide (8) selon l'une quelconque des revendications 1 à 4, **caractérisée en ce qu'**au moins un matériau isolant (9) peut être inséré dans chaque espace séparant la paroi d'un tube (2) de la paroi d'un autre tube (3).

6. Tubulure rigide (8) selon la revendication 5, **caractérisée en ce que** le matériau isolant (9) est constitué à base de fibres de verre ou d'au moins un isolant microporeux du type laine de roche.

7. Tubulure rigide (1, 8) selon l'une quelconque des revendications 1 à 6, **caractérisée en ce qu'**elle comprend trois tubes (2, 3, 4) coaxiaux.

8. Tubulure rigide (1, 8) selon la revendication 7, **caractérisée en ce qu'**elle comprend un tube externe (2) à paroi lisse dans lequel est inséré un tube intermédiaire (3) à paroi ondulée à l'intérieur duquel est inséré un tube interne (2) à paroi lisse.

9. Tubulure rigide (8) selon la revendication 8, **caractérisée en ce qu'**une couche (9) de matériau isolant est disposée entre la paroi lisse du tube externe (2) et la paroi ondulée du tube intermédiaire (3).

## Claims

1. A rigid tube (1, 8, 10), obtained by bending comprising a first tube (2) into which a tube (3, 11) is inserted coaxially, one of the two tubes having a smooth wall and the other having in majority a corrugated wall, **characterized in that** it comprises at least one third tube (4) inserted into the second tube co-axially, the being alternately with a smooth wall and with a corrugated wall, and **in that** each tube (2, 3, 4, 11) has a thickness of less than 1 mm.

2. The rigid tube (1, 8, 10) according to claim 1, **characterized in that** the tubes (2, 3, 4, 11) are in steel, or in stainless steel, or further in aluminium.

3. The rigid tube (1, 8, 10) according to any of claims 1 or 2, **characterized in that** the wall of each tube (3, 11) with a corrugated wall has substantially parallel or helicoidal corrugations.

4. The rigid tube (10) according to any of claims 1 to 3, **characterized in that** the wall of each tube (11) with a corrugated wall may be locally smooth, the bending being carried out in areas where the wall of the tube (11) with a corrugated wall is corrugated.

5. The rigid tube (8) according to any of claims 1 to 4, **characterized in that** at least one insulating material (9) may be inserted into each space separating the wall of a tube (2) from the wall of another (3).

6. The rigid tube (8) according to claim 5, **characterized in that** the insulating material (9) consists of a basis of glass fibers or of at least one microporous insulator of the rock wool type.

7. The rigid tube (1, 8) according to any of claims 1 to 6, **characterized in that** it comprises three coaxial tubes (2, 3, 4).

8. The rigid tube (1, 8) according to claim 7, **characterized in that** it comprises an external tube (2) with a smooth wall, into which is inserted an intermediate tube (3) with a corrugated wall inside which is inserted an internal tube (2) with a smooth wall.

9. The rigid tube (8) according to claim 8, **characterized in that** a layer (9) of insulating material arranged between the smooth wall of the external tube (2) and the corrugated wall of the intermediate tube (3).

## Patentansprüche

1. Starre Röhre (1, 8, 10), erhalten durch Rundbiegung, umfassend ein erstes Rohr (2), in das ein zweites Rohr (3,11) auf koaxiale Weise eingeführt ist, wobei eines der zwei Rohre eine glatte Wand und das andere eine zum Großteil gewellte Wand aufweist, **dadurch gekennzeichnet, dass** sie mindestens ein drittes Rohr (4) umfasst, das in das zweite Rohr auf koaxiale Weise eingeführt ist, wobei die Rohre alternativ eine glatte Wand und eine gewellte Wand aufweisen, und **dadurch**, dass jedes Rohr (2, 3, 4, 11) eine Dicke von weniger als 1 mm aufweist.

2. Starre Röhre (1, 8, 10) nach Anspruch 1, **dadurch gekennzeichnet, dass** die Rohre (2, 3, 4, 11) aus Stahl oder aus rostfreiem Stahl oder auch aus Aluminium bestehen.

3. Starre Röhre (1, 8, 10) nach einem der Ansprüche 1 oder 2, **dadurch gekennzeichnet, dass** die Wand jedes Rohrs (3, 11) mit gewellter Wand Wellen aufweist, die im Wesentlichen parallel oder schraubenförmig sind.

4. Starre Röhre (10) nach einem der Ansprüche 1 bis 3, **dadurch gekennzeichnet, dass** die Wand jedes Rohrs (11) mit gewellter Wand örtlich glatt sein kann, wobei die Rundbiegung in den Bereichen durchgeführt wird, in denen die Wand des Rohrs (11) mit gewellter Wand gewellt ist.

5. Starre Röhre (8) nach einem der Ansprüche 1 bis 4, **dadurch gekennzeichnet, dass** mindestens ein isolierendes Material (9) in jeden Raum eingeführt werden kann, der die Wand eines Rohrs (2) von der Wand eines anderen Rohrs (3) trennt.

6. Starre Röhre (8) nach Anspruch 5, **dadurch gekennzeichnet, dass** das isolierende Material (9) auf der Grundlage von Glasfasern oder mindestens eines mikroporösen Isoliermaterials des Typs Steinwolle besteht.

7. Starre Röhre (1, 8) nach einem der Ansprüche 1 bis 6, **dadurch gekennzeichnet, dass** sie drei koaxiale Rohre (2, 3, 4) umfasst.

8. Starre Röhre (1, 8) nach Anspruch 7, **dadurch gekennzeichnet, dass** sie ein externes Rohr (2) mit einer glatten Wand umfasst, in der ein Zwischenrohr (3) mit einer gewellten Wand eingeführt ist, in dessen Innerem ein internes Rohr (2) mit einer glatten Wand eingeführt ist.

9. Starre Röhre (8) nach Anspruch 8, **dadurch gekennzeichnet, dass** eine Schicht (9) aus isolierendem Material zwischen der glatten Wand des externen Rohrs (2) und der gewellten Wand des Zwischenrohrs (3) angebracht ist.
